# EUROPÄISCHE PATENTSCHRIFT

(11) **EP 0 788 011 B1**
(45) Veröffentlichungstag und Bekanntmachung des Hinweises auf die Patenterteilung: **24.05.2000**
(21) Anmeldenummer: 96112710.7
(22) Anmeldetag: 07.08.1996
(51) Int. Cl.: G02F 1/133

(54) **Flüssigkristall-Anzeigevorrichtung**
Liquid crystal display device
Dispositif d'affichage à cristal liquide

(30) Priorität: 31.01.1996 DE 19603352
(43) Veröffentlichungstag der Anmeldung: 06.08.1997
(73) Patentinhaber: Mannesmann VDO AG, 60326 Frankfurt (DE)
(72) Erfinder: Brandt, Peter, 64832 Babenhausen (DE); Tippl, Dietmar, 65779 Kelkheim/Ts. (DE)
(74) Vertreter: Klein, Thomas, Dipl.-Ing.

(56) Entgegenhaltungen:
- EP-A- 0 191 466
- US-A- 5 329 387
- CLERC J F: "Liquid crystal dot-matrix display using a multiplexed guest-host effect" DISPLAYS, TECHNOLOGY AND APPLICATIONS, JULY 1985, UK, Bd. 6, Nr. 3, ISSN 0141-9382, Seiten 148-152, XP002060224
- PATENT ABSTRACTS OF JAPAN vol. 014, no. 258 (P-1055), 4.Juni 1990 -& JP 02 069721 A (PIONEER ELECTRON CORP), 8.März 1990,

## Beschreibung

Die Erfindung bezieht sich auf ein Verfahren zur Ansteuerung einer Anzeigeeinrichtung mit einer durch eine Lichtquelle transmissiv beleuchtbaren TN-Flüssigkristallzelle, deren nematische Flüssigkristallsubstanz einen Farbstoff enthält, deren Ansteuerbereiche mit einer Ansteuerspannung zwischen einem Ansteuerpegel und einem Nichtansteuerpegel der elektrooptischen Kennlinie beaufschlagbar ist und durch die helle Zeichen auf einer dunklen Anzeigefläche darstellbar sind.

Bei derartigen Anzeigeeinrichtungen ist es bekannt, die Ansteuerbereiche mit einer Ansteuerspannung zwischen einem Ansteuerpegel, bei dem der Ansteuerbereich hell erscheint, und einem Nichtansteuerpegel, bei dem der Ansteuerbereich dunkel erscheint, zu beaufschlagen, wobei als Nichtansteuerpegel ein Bereich der elektrooptischen Kennlinie benutzt wird, der sich außerhalb des Unterschwingerbereichs der elektrooptischen Kennlinie befindet. Durch den der nematischen Flüssigkristallsubstanz zugemischten Farbstoff wird im nicht angesteuerten Zustand die bei Temperaturerhöhung entstehende, durch Änderung des Brechungsindexes der Flüssigkristallsubstanz bedingte Farbänderung verhindert. Ein ähnliches Anzeigegerät ist aus EP 0 191 466 A bekannt.

Aufgabe der Erfindung ist es, ein Verfahren der eingangs genannten Art zu schaffen, das einen hohen Kontrast zwischen den angesteuerten und nicht angesteuerten Ansteuerbereichen bei temperaturunabhängig konstanter Farbe der angesteuerten Ansteuerbereiche ermöglicht.

Diese Aufgabe wird erfindungsgemäß gelöst, durch die jeweiligen Merkmale des kennzeichnenden Teils der unabhängigen Ansprüche 1 und 2. Durch diese Ausbildung sind die nicht angesteuerten Ansteuerbereiche besonders dunkel, so daß ein besonders starker Kontrast zu den hell erscheinenden angesteuerten Ansteuerbereichen entsteht, der sich wegen des Farbstoffs auch bei durch Temperaturänderung bedingter Brechungsindexänderung des Flüssigkristalls nicht ändert.

Ist die Flüssigkristallzelle eine STN-Flüssigkristallzelle, bei der eine Verdrillung der Flüssigkristallorientierung von 180° und mehr erfolgt, so ist besonders günstig, eine Ansteuerung mit geringem Spannungsunterschied zwischen dem Ansteuerpegel und dem Nichtansteuerpegel bei hohem Transmissionsunterschied und somit starkem Kontrast möglich.

Dies ist weiterhin besonders von Vorteil, wenn die Flüssigkristallzelle eine Dotmatrixzelle ist, da sie dann mit hohen Multiplexraten ansteuerbar ist, ohne daß es zu einer Reduzierung des starken Kontrasts kommt. Darüber hinaus führen die über die ganze Anzeigefläche gleichmäßig verteilten Anzeigedots zu einem gleichmäßig dunkelen Anzeigefeld.

Wird die Anzeigeeinrichtung von einer Lichtquelle weißen Lichts beleuchtet, so erscheinen die angesteuerten Ansteuerbereiche in einer Färbung, die der Eigenfarbe der Flüssigkristallzelle entspricht. Dies ist bei einer STN-Flüssigkristallzelle eine bläuliche Färbung.

Bei Verwendung einer farbigen Lichtquelle erscheinen die angesteuerten Ansteuerbereiche in einer additiven Farbmischung der Eigenfarbe der Flüssigkristallzelle und der Lichtfarbe. Durch entsprechende Auswahl der Lichtfarbe ist somit die für den Beobachter sichtbare Farbe der angesteuerten Ansteuerbereiche bestimmbar.

Als Lichtquelle dient vorzugsweise eine Leuchtdiode. Bei mehreren alternativ ansteuerbaren Lichtquellen, insbesondere Leuchtdioden, ist eine Farbumschaltung der Anzeigeeinrichtung möglich.

Eine Farbbeeinflussung der Mischfarbe aus Lichtfarbe und Eigenfarbe der Flüssigkristallzelle durch den Farbstoff der Flüssigkristallzelle erfolgt nicht.

Die Flüssigkristallzelle kann eine Teile ihres Frontsubstrates bedeckende Beschichtung gleicher Farbe wie der Farbe der nicht angesteuerten Ansteuerbereiche der Flüssigkristallzelle aufweisen. Da sich die Farbe der nicht angesteuerten Ansteuerbereiche der Flüssigkristallzelle selbst bei Temperaturänderung nicht ändert, bilden die vorzugsweise undurchleuchtbar farbbeschichteten Bereiche und die nicht angesteuerten Bereiche der Flüssigkristallzelle immer eine farbgleiche einheitliche Fläche dunkler Farbe.

Vorzugsweise ist dabei die Farbe der Beschichtung schwarz.

Die Beschichtung kann auf einfache Weise als Farbdruck oder als Farbfolie ausgebildet sein.

Weiterhin kann die Beschichtung entweder zelleninnenseitig oder zellenaußenseitig auf dem Frontsubstrat der Flüssigkristallzelle angeordnet sein.

Ein Ausführungsbeispiel einer Flüssigkristallzelle, auf die die Erfindung angewendet werden kann ist in der Zeichnung dargestellt und wird im Folgenden näher beschrieben.

Es zeigen:
- Fig. 1: einen teilweisen Querschnitt einer Anzeigeeinrichtung

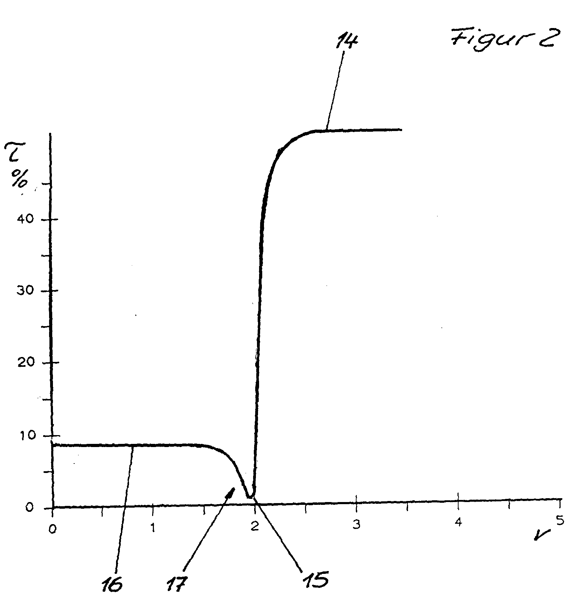

- Fig. 2:: ein Diagramm der Transmission über der Ansteuerspannung mit einer elektrooptischen Kennlinie.

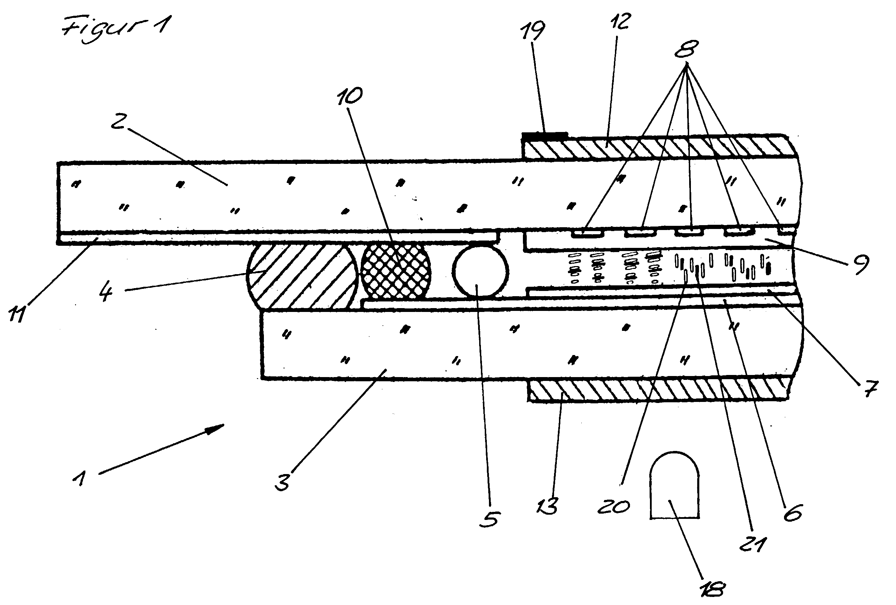

Die in Fig. 1 dargestellte Anzeigeeinrichtung weist eine STN-Flüssigkristallzelle 1 auf, die zwei im Abstand zueinander angeordnete transparente Substrate 2 und 3 besitzt. An ihrem umlaufenden Randbereich ist der Innenraum der STN-Flüssigkristallzelle 1 durch eine Dichtung 4 verschlossen. Abstandshalter 5 halten die Substrate 2 und 3 auf einem bestimmten Abstand voneinander.

Der Innenraum der STN-Flüssigkristallzelle 1 ist mit einer Flüssigkristallsubstanz 20 gefüllt.

Zellenseitig sind auf dem hinteren Substrat 3 parallell zueinander verlaufende Streifenelektroden 6 angeordnet, die von einer Orientierungschicht 7 bedeckt sind.

Auf dem vorderen Substrat 2 sind zellenseitig transparente parallel zueinander verlaufende Streifenelektroden 8 angeordnet, die sich rechtwinkling zu den Streifenelektroden 6 erstrecken, die ebenfalls von einer Orientierungschicht 9 überdeckt sind und eine Dotmatrix bilden.

Dabei bilden die sich überdeckenden Bereiche der Streifenelektroden 6 und der Streifenelektroden 8 Ansteuerbereiche.

Die Streifenelektroden 6 sind über Überbrückungskontakte 10 mit auf dem Substrat 2 angeodneten aus dem Zelleninneren nach außen führenden Ansteuerkontakten 11 verbunden.

Die Streifenelektroden 8 sind über nicht dargestellte Ansteuerkontakte mit dem Zellenäußeren verbunden und im Multiplexverfahren mit einer Ansteuerspannung beaufschlagbar.

Außenseitig ist auf jedem Substrat 2 und 3 ein Polarisator 12 bzw. 13 angeordnet.

Von der Rückseite her ist die STN-Flüssigkristallzelle 1 von einer Lichtquelle 18, die eine Leuchdiode ist, transmissiv durchleuchtbar.

Auf dem vorderseitigen Polarisator 12 ist eine schwarze, nicht durchleuchtbare Beschichtung 19 aufgedruckt, die die Bereiche abdeckt, in denen sich keine Ansteuerbereiche befinden.

Die STN-Flüssigkristallzelle 1 ist mit einer Ansteuerspannung zwischen einem Ansteuerpegel 14 und einem Nichtansteuerpegel 15 in dessen die geringste Transmission aufweisenden Unterschwingerbereich beaufschlagbar.

Durch die Ausnutzung eines Nichtansteuerpegels, des in dem die geringste Transmission aufweisenden Unterschwingerbereich 17 liegt, der sich zwischen dem normalen Nichtansteuerpegel 16 bei geringer Ansteuerspannung und dem Ansteuerpegel 14 bei höherer Ansteuerspannung befindet, erscheinen die nicht angesteuerten Bereiche besonders dunkel und mit besonders hohem Kontrast zu den angesteuerten Bereichen.

## Patentansprüche

1. Verfahren zur Ansteuerung einer Anzeigeeinrichtung mit einer durch eine Lichtquelle transmissiv beleuchtbaren TN-Flüssigkristallzelle, die einen Unterschwingerbereich (17) in der Transmissions-Spannungskennlinie aufweist und deren nematische Flüssigkristallsubstanz einen Farbstoff enthält, deren Ansteuerbereiche mit einer Ansteuerspannung zwischen einem Ansteuerpegel und einem Nichtansteuerpegel der elektrooptischen Kennlinie beaufschlagbar ist und durch die helle Zeichen auf einer dunklen Anzeigefläche darstellbar sind, dadurch gekennzeichnet, daß die nicht angesteuerten Ansteuerbereiche der Flüssigkristallzelle (1) mit einer Ansteuerspannung zwischen dem Ansteuerpegel (14) und dem Nichtansteuerpegel (15) in dessen Unterschwingerbereich (17) beaufschlagt werden, derart daß die nicht angesteuerten Ansteuerbereiche die geringste Transmission aufweisen.

2. Verfahren zur Ansteuerung einer Anzeigeeinrichtung mit einer durch eine Lichtquelle transmissiv beleuchtbaren STN-Flüssigkristallzelle, die einen Unterschwingerbereich (17) in der Transmissions-Spannungskennlinie aufweist und deren nematische Flüssigkristallsubstanz einen Farbstoff enthält, deren Ansteuerbereiche mit einer Ansteuerspannung zwischen einem Ansteuerpegel und einem Nichtansteuerpegel der elektrooptischen Kennlinie beaufschlagbar ist und durch die helle Zeichen auf einer dunklen Anzeigefläche darstellbar sind, dadurch gekennzeichnet, daß die nicht angesteuerten Ansteuerbereiche der Flüssigkristallzelle (1) mit einer Ansteuerspannung zwischen dem Ansteuerpegel (14) und dem Nichtansteuerpegel (15) in dessen Unterschwingerbereich (17) beaufschlagt werden, derart, daß die nicht angesteuerten Ansteuerbereiche die geringste Transmission aufweisen.

3. Verfahren nach einem der vorhergehenden Ansprüche, dadurch gekennzeichnet, daß die Flüssigkristallzelle eine Dotmatrixzelle ist.

4. Verfahren nach einem der vorhergehenden Ansprüche, dadurch gekennzeichnet, daß die Lichtquelle eine farbige Lichtquelle ist.

5. Verfahren nach einem der vorhergehenden Ansprüche, dadurch gekennzeichnet, daß die Lichtquelle (18) eine Leuchtdiode ist.

6. Verfahren nach einem der vorhergehenden Ansprüche, dadurch gekennzeichnet, daß auf die Flüssigkristallzelle eine Teile ihres Frontsubstrates bedeckende Beschichtung (19) gleicher Farbe wie die Farbe der nicht angesteuerten Ansteuerbereiche der Flüssigkristallzelle aufgebracht wird.

7. Verfahren nach Anspruch 6, dadurch gekennzeichnet, daß die Farbe der Beschichtung (19) schwarz ist.

8. Verfahren nach Anspruch 6, dadurch gekennzeichnet, daß die Beschichtung(19) durch Farbdruck aufgebracht wird.

9. Verfahren nach Anspruch 6, dadurch gekennzeichnet, daß die Beschichtung als eine Farbfolie aufgebracht wird.

## Claims

1. Process for addressing a display device with a TN liquid-crystal cell which can be illuminated transmissively by means of a light source and has an undershoot region (17) in the transmission voltage characteristic line and whose nematic liquid-crystal substance contains a dye whose addressing regions can be subjected to an addressing voltage between an addressing level and a non-addressing level of the electro-optical characteristic line and by means of which pale symbols can be displayed on a dark display area, characterized in that the non-addressed addressing regions of the liquid-crystal cell (1) are subjected to an addressing voltage between the addressing level (14) and the non-addressing level (15) in the undershoot region (17) thereof in such a way that the non-addressed addressing regions have the lowest transmission.

2. Process for addressing a display device with an STN liquid-crystal cell which can be illuminated transmissively by means of a light source and has a undershoot region (17) in the transmission voltage characteristic line and whose nematic liquid-crystal substance contains a dye whose addressing regions can be subjected to an addressing voltage between an addressing level and a non-addressing level of the electro-optical characteristic line and by means of which pale symbols can be displayed on a dark display area, characterized in that the non-addressed addressing regions of the liquid-crystal cell (1) are subjected to an addressing voltage between the addressing level (14) and the non-addressing level (15) in the undershoot region (17) thereof in such a way that the non-addressed addressing regions have the lowest transmission.

3. Process according to one of the preceding Claims, characterized in that the liquid-crystal cell is a dot matrix cell.

4. Process according to one of the preceding Claims, characterized in that the light source is a coloured light source.

5. Process according to one of the preceding Claims, characterized in that the light source (18) is a light diode.

6. Process according to one of the preceding Claims, characterized in that a coating (19) which is of the same colour as the colour of the non-addressed addressing regions of the liquid-crystal display and which covers parts of the front substrate of the liquid-crystal cell is applied to the liquid-crystal cell.

7. Process according to Claim 6, characterized in that the colour of the coating (19) is black.

8. Process according to Claim 6, characterized in that the coating (19) is applied by colour printing.

9. Process according to Claim 6, characterized in that the coating is applied as a coloured film.

## Revendications

1. Procédé d'excitation d'un dispositif d'affichage avec une cellule à cristaux liquides TN pouvant être éclairée par transmission par une source lumineuse, qui présente une zone de distorsion par sous-modulation (17) dans la courbe caractéristique de tension de transmission et dont la substance à cristaux liquides nématique contient une matière colorante, dont les zones d'excitation peuvent être alimentées en tension d'excitation entre un niveau d'excitation et un niveau de non-excitation de la courbe caractéristique électro-optique et peuvent être représentées par les signaux clairs sur une surface d'affichage foncée, caractérisé en ce que les zones d'excitation non excitées de la cellule à cristaux liquides (1) sont alimentées en tension d'excitation entre le niveau d'excitation (14) et le niveau de non-excitation (15) dans la zone de distorsion par sous-modulation (17), de telle sorte que les zones d'excitation non excitées présentent la transmission la plus faible.

2. Procédé d'excitation d'un dispositif d'affichage avec une cellule à cristaux liquides STN pouvant être éclairée par transmission par une source lumineuse, qui présente une zone de distorsion par sous-modulation (17) dans la courbe caractéristique de tension de transmission et dont la substance à cristaux liquides nématique contient une matière colorante, dont les zones d'excitation peuvent être alimentées en tension d'excitation entre un niveau d'excitation et un niveau de non-excitation de la courbe caractéristique électro-optique et peuvent être représentées par les signaux clairs sur une surface d'affichage foncée, caractérisé en ce que les zones d'excitation non excitées de la cellule à cristaux liquides (1) sont alimentées en tension d'excitation entre le niveau d'excitation (14) et le niveau de non-excitation (15) dans la zone de distorsion par sous-modulation (17), de telle sorte que les zones d'excitation non excitées présentent la transmission la plus faible.

3. Procédé suivant l'une des revendications précédentes, caractérisé en ce que la cellule à cristaux liquides est une cellule à matrice à points.

4. Procédé suivant l'une des revendications précédentes, caractérisé en ce que la source lumineuse est une source lumineuse colorée.

5. Procédé suivant l'une des revendications précédentes, caractérisé en ce que la source lumineuse (18) est une diode lumineuse.

6. Procédé suivant l'une des revendications précédentes, caractérisé en ce qu'un revêtement (19), couvrant une partie de son substrat avant, de même couleur que la couleur des zones non excitées de la cellule à cristaux liquides, est appliqué sur la cellule à cristaux liquides.

7. Procédé suivant la revendication 6, caractérisé en ce que la couleur du revêtement (19) est le noir.

8. Procédé suivant la revendication 6, caractérisé en ce que le revêtement (19) est appliqué par impression couleur.

9. Procédé suivant la revendication 6, caractérisé en ce que le revêtement est appliqué sous la forme d'une pellicule de couleur.
